# EUROPEAN PATENT APPLICATION

(11) **EP 2 878 351 A1**
(43) Date of publication of application: **03.06.2015**
(21) Application number: 13809722.5
(22) Date of filing: 25.04.2013
(51) Int. Cl.: B01D 29/41, B01D 29/66

(54) **HIGH-EFFICIENCY DYNAMIC SLURRY-LIQUID-SEPARATING FILTRATION APPARATUS AND FILTRATION METHOD THEREFOR**

(30) Priority: 29.06.2012 CN 201210221911
(71) Applicant: Sunshine Kaidi New Energy Group Co., Ltd., Wuhan, Hubei 430223 (CN)
(72) Inventor: CHEN, Yilong, Wuhan Hubei 430223 (CN); JIN, Jiaqi, Wuhan Hubei 430223 (CN); ZHANG, Yanfeng, Wuhan Hubei 430223 (CN); JIANG, Manyi, Wuhan Hubei 430223 (CN)
(74) Representative: Zeuner Summerer Stütz
(86) International application number: PCT/CN2013/074684
(87) International publication number: WO 2014/000500

(57) **Abstract**

A high-efficiency dynamic slurry-liquid-separating filtration apparatus and a filtration method therefor. The filtration apparatus comprises a filter cylinder body (1), a filter pipe (2a) and a filter core on the filter pipe (2a) arranged within the filter cylinder body (1), a material inlet (3) on the filter cylinder body (1), a solid residue outlet (4) provided at the bottom part of the filter cylinder body (1), and a filtrate outlet (5) provided at the mid-bottom part of the filter cylinder body (1), where the filter core is multiple filter plates (2b) connected with the filter pipe (2a), where the filter plates (2b) are perpendicular to the longitudinal axis of the filter cylinder body (1), and where the upper end of the filter pipe (2a) is connected to a rotary shaft of an inverter motor (7). The filtration method comprises: preheating the filtration apparatus; after filtering for a period of time, adjusting the rotational speed of the inverter motor (7), thus removing a thin layer of filter residue cake on the filter plates (2b).

## Description

### FIELD OF THE INVENTION

The invention relates to a high-efficiency dynamic slurry-liquid separator filter and a filtration method therefor, which belong to the technical field of the separation of liquid-solid two-phase(or gas-liquid-solid three-phase) slurry, and more particularly to an apparatus and a method for filtering a slurry having a relatively large viscosity.

### BACKGROUND OF THE INVENTION

Noble metal catalysts are a kind of noble metal materials that are capable of changing the chemical reaction rate but themselves neither participate in the reaction nor be involved in the final products. Almost all noble metals can be used as catalysts, but platinum, palladium, rhodium, silver, and ruthenium are commonly used. Because d electron orbits of these noble metals are not fully occupied, surfaces thereof easily absorb reactants, and the intensities thereof are moderate, which is beneficial for the formation of the intermediate "active compounds". Besides, the noble metals possess relatively high catalytic activities and have excellent performances in high temperature resistance, oxidation resistance, and corrosion resistance, thus, the noble metals become the most important catalyst materials. However, the resources of the noble metals and the production costs are the primary factors that always restrict the application of this kind of catalysts.

Chines Patent Publication Number CN 101623574A has revealed a method for magnetically filtering Fischer-Tropsch synthesized heavy wax. The method requires both a catalyst and a carrier to have magnetic properties. Thus, the method has a narrow application range, and the filtration effect cannot be ensured along with the seriously breaking of the catalyst.

Chines Patent Publication Number CN 101391196Ahas disclosed a method for extracting Fischer-Tropsch synthesis product heavy distillate from a slurry bed reactor. The filtration accuracy is between 130 and 300% of a grain size of the catalyst powder and only between 25 and 35 µm. Such method only functions in crude filtration of the heavy distillate while the spent catalyst still remains in the reactor, and therefore, the real separation of the catalyst cannot be achieved, the filtration accuracy is also not high, the heavy distillate still contains relatively much catalyst, and the quality of the products hardly meets the requirement.

Despite highly efficient continuous separation of the solid catalyst particles, a liquid state products, and reaction gas is achieved in Chines Patent Publication Number CN 101314120A, the catalyst carries away a relatively high amount of liquid, and meanwhile a part of fresh catalyst is inevitably carried away, and a relatively large amount of products are lost.

Chines Patent Publication Number CN 101417219A adopts an outer filter method to realize the separation of a wax from a catalyst in a slurry reactor. The method has been extensively tried in domestic and abroad and it has been found that the wax outer filter has quickly saturated filtration capacity, frequent backblow and regeneration cycles; and the returning route of the catalyst after wax filtration is often blocked, thereby affecting the normal operation of the reactor. In addition, blockage of a fine filter often occurs.

Chines Patent Publication Number CN 1589957A adopts an inner filter method that realizes the separation of the product from the catalyst and at the same time solves the blockage problem, however, the removal of the waste catalyst from the reactor has not been taken into consideration, and a liquid-solid separation section also increases the height of the reactor, which results in relatively large increment of the cost of the reactor particularly for large scale reactors.

Chines Patent Publication Number CN 101396647A also adopts the inner filter method. Although the separation of the product from the catalyst as well as the blockage problem are solved, improper operation in practical operation easily results in damage of the filter cloth, and the problem of the removal of the waste catalyst from the reactor is neglected.

### SUMMARY OF THE INVENTION

It is one objective of the invention to provide a high-efficiency dynamic slurry-liquid separator filter and a filtration method therefore. The high-efficiency dynamic slurry-liquid separator filter is beneficial to separating a liquid-solid two-phase(orgas-liquid-solid three-phase) slurry in conditions of a relatively high temperature and a relatively high pressure, and particularly solves the recovery of the noble metal waste catalysts from the slurry, which provides possibility for the regeneration and the recovery of the waste catalysts, practically lowers the production cost of the noble metal catalysts, and therefore promotes the wide application of the noble metal catalysts. Besides, the apparatus and the method of the invention also effectively solves the separation of any liquid-solid two-phase (orgas-liquid-solid three-phase) slurry and ensures the quality of the products.

Technical scheme of the invention is as follows: a high-efficiency dynamic slurry-liquid separator filter, comprises: a filter cylinder body, a filter pipe disposed in the filter cylinder body and a filter core disposed on the filter pipe, a material inlet disposed on the filter cylinder body, a solid residue outlet disposed at a bottom part of the filter cylinder body, and a filtrate outlet disposed at a middle-lower part of the filter cylinder body. The filter core comprises a plurality of filter disks connected to the filter pipe, and the filter disks are perpendicular to a longitudinal axis of the filter cylinder body. An upper end of the filter pipe is connected to a rotational axis of a variable-frequency motor. A top part of the filter cylinder body and a transmission shaft of the variable-frequency motor are sealed through high pressure hard sealing. A lower part of the filter pipe is connected to a pipe of the filtrate outlet via a connecting pipe joint. The connecting pipe joint and the pipe of the filtrate outlet are perpendicularly fixed together. An upper opening of the connecting pipe joint and a rotational connection part of the lower part of the filter pipe are sealed through high-pressure hard sealing. A lower part of the connecting pipe joint is sealed.

Each filter disk separately communicates with the filter pipe; the filter disks and the filter pipe form groove connection. The filter disk is fixed on a grooved plate for collecting a filtrate. The filter disk and the grooved plate form a sealed cavity, and a pipe opening at an inner side of the sealed cavity communicates with an inner cavity of the filter pipe. The grooved plate is connected to the filter pipe via a clamp. The collected filtrate from each grooved plate is accumulated in the filter pipe.

The filter disks are sintered porous metal materials having a pore size distribution of between 15 and 160 µm, a thickness of between 1 and 3 mm, and a working temperature range of between -200 and 800°C. An upper surface of each filter disk is coated with a nanoscale surface agent.

The bottom part of the filter cylinder body is in a conical structure. An outer wall of the filter cylinder body is provided with an insulation jacket layer. A vapor inlet is disposed at a middle-upper part of the filter cylinder body for communicating with the insulation jacket layer.

A straight cylinder body and an upper part head of the filter cylinder body are connected by a flange.

A height of the material inlet is higher than a height of the filtrate outlet by H1 of between 200 and 700 mm. A distance between the filtrate outlet and the bottom is H2 of between 400 and 700 mm.

The lower part of the filter cylinder body is provided with a remaining material outlet by H3 of between 200 and 300 mm. A condensate outlet is disposed between the filtrate outlet and the solid residue outlet. A ventilation opening is disposed on an upper part of the filter cylinder body.

A straight cylinder body and an upper part head of the filter cylinder body are connected by a flange.

A method for dynamically separating a slurry, the method comprises the following steps:
1) preheating a separator filter, adding materials to a slurry cavity of a filter body from a material inlet and to reach filter plates; controlling a rotational speed of the filter plates at a range of between 10 and 100 rpm; separating a solid filter residue from the materials on the filter plates, and allowing a filtrate to flow from the filter disks into a pipe of a filtrate outlet via a flow passage of the filter disk, and discharging the filtrate out of the separator filter;
2) continuing the filtration and allowing a filter cake of the filter residues to accumulate on the filter disk to reach a certain thickness until an inside-outside pressure difference of a filter pipe reaches 2.0 MPa; increasing the rotational speed of a motor driving the filter disk to between 100 and 300 rpm so as to remove the filter cake of the filter residues from the filter disk; when the filter cake of the filter residues is removed from the filter disk and the inside-outside pressure difference is less than 50 kPa, controlling the rotational speed of the motor driving the filter disk within a range of between 10 and 100 rpm, maintaining normal filtering operation;
3) when the filtering operation is finished or the filter residues in the bottom part of the filter needs to be discharged, stopping filtering, removing the filter residues for preparation of a next filtration process; and
4) when the filter disk needs to be cleaned, starting a backblow system, stopping the materials from entering the slurry cavity of the filter body, enabling the filtrate outlet to serve as a backblow medium inlet, the backblow medium being a filtrate supernatant or a diesel oil; carrying out backblow operation on the filtrate disk using the backblow medium; controlling the filtrate disk to operate at a rotational speed of between 10 and 100 rpm; and continuing the filtering operation after the backblow operation.

The slurry cavity of the filter cylinder body has a working temperature of between 200 and 400°C and a working pressure of between 3.0 and 5.0 MPa (G).

Advantages according to embodiments of the invention are as follows: the invention is particularly applicable for the recovery of the filter residues (noble metal waste catalysts). The invention increases the quality and the production of the products and explores a feasible method for recovering the filter residues (noble metal waste catalysts) and ensuring the products quality, thereby promoting the industrial application of the noble metal waste catalysts and realizing the filtration of materials at high temperatures. Compared with low temperature filtration methods, in conditions of adopting hot feeding means in the subsequent processing of the products, the method of the invention does not only improve the filtration effect but also decreases the energy consumption for apparatus cooling and the energy consumption necessitated in the upgrading and heating processes of the products in subsequent processing, thereby largely decreasing a comprehensive energy consumption. Meanwhile, the high pressure filtration is realized, which effectively decreases the energy consumption necessitated by the pressure boosting in the subsequent high pressure processing. The backblow medium of the backblow system adopts the filtrate supernatant, which avoids secondary pollution to the filter materials and does not produce wastewater resulted from the backblow in the conventional filter.

### BRIEF DESCRIPTION OF THE DRAWINGS

FIG 1 is a structure diagram of a high-efficiency dynamic slurry-liquid separator filter of the invention;
FIG. 2 is a structure diagram showing filter disks of the invention; and
FIG 3 is a schematic diagram showing a flow pattern of filtration materials on the filter disks.

### DETAILED DESCRIPTION OF THE EMBODIMENTS

For further illustrating the invention, experiments detailing a high-efficiency dynamic slurry-liquid separator filter and a filtration method therefor are described herein below combined with the drawings.

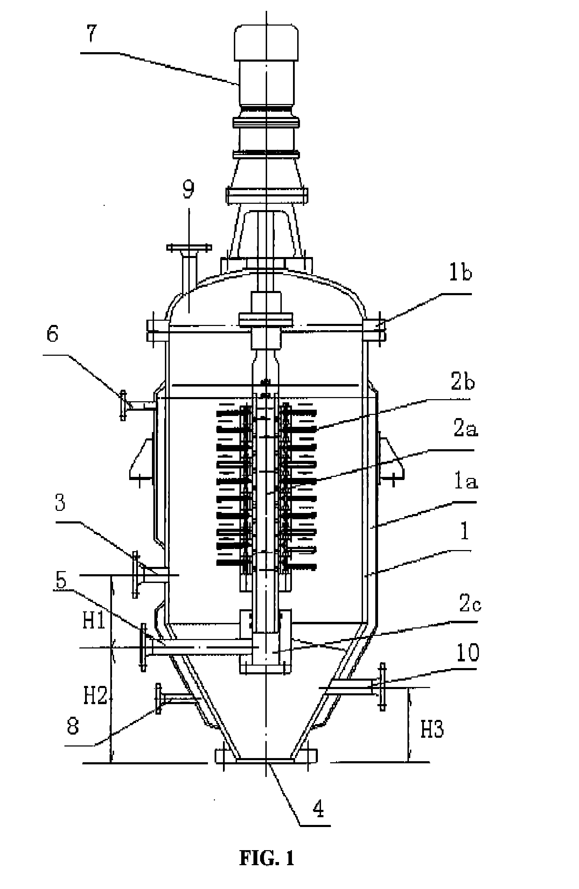

FIG 1 is a structure diagram of a high-efficiency dynamic slurry-liquid separator filter of the invention.

A high-efficiency dynamic slurry-liquid separator filter comprises: a filter cylinder body 1, a filter pipe 2a disposed in the filter cylinder body 1 and a filter core disposed on the filter pipe 2a, a material inlet 3 disposed on the filter cylinder body 1, a solid residue outlet 4 disposed at a bottom part of the filter cylinder body 1, and a filtrate outlet 5 disposed at a middle-lower part of the filter cylinder body **1**.The filter core comprises a plurality of filter disks 2b connected to the filter pipe **2a**, and the filter disks 2b are perpendicular to a longitudinal axis of the filter cylinder body **1**.An upper end of the filter pipe **2a** is connected to a rotational axis of a variable-frequency motor 7. A top part of the filter cylinder body **1** and a transmission shaft of the variable-frequency motor 7 are sealed through high pressure hard sealing. A lower part of the filter pipe **2a** is connected to a pipe of the filtrate outlet **5**via a connecting pipe joint **2c.The** connecting pipe joint **2c** and the pipe of the filtrate outlet are perpendicularly fixed together. An upper opening of the connecting pipe joint**2c** and a rotational connection part of the lower part of the filter pipe **2a** are sealed through high-pressure hard sealing, A lower part of the connecting pipe joint **2c** is sealed.

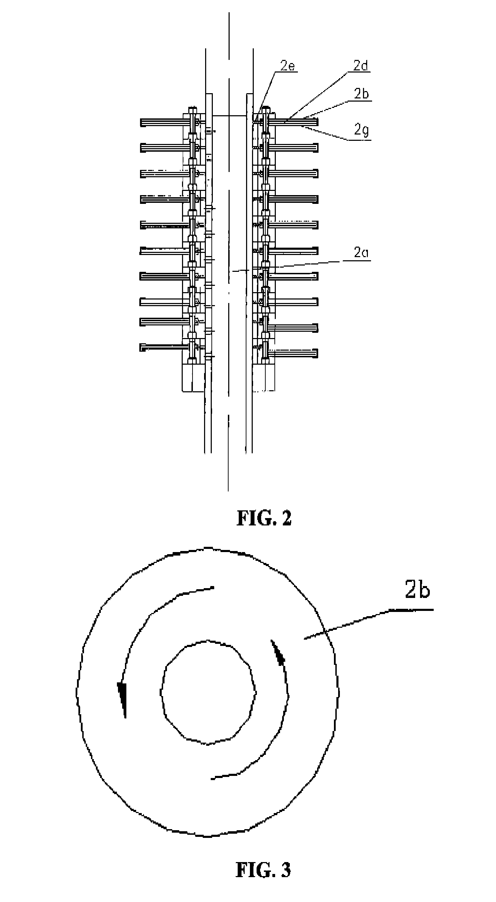

A structure of filter disks is shown in FIG. **2****.** Each filter disk **2b** separately communicates with the filter pipe **2a**; the filter disks **2**b and the filter pipe **2a** form groove connection. The filter disk **2b** is fixed on a grooved plate **2g** for collecting a filtrate. The filter disk **2b** and the grooved plate **2g** form a sealed cavity **2d,** and a pipe opening **2**eat an inner side of the sealed cavity **2d** communicates with an inner cavity of the filter pipe **2a**. The grooved plate **2g** is connected to the filter pipe **2a** via a clamp **2f**. The collected filtrate from each grooved plate **2g** is accumulated in the filter pipe **2a**.The filter disks **2b** are sintered porous metal materials having a pore size distribution of between 15 and 160 µm, a thickness of between 1 and 3 mm, and a working temperature range of between -200 and 800°C. An upper surface of each filter disk is coated with a nanoscale surface agent. The sintered porous metal materials of the filter disks **2b** have different porosities, pore sizes, and pore size distributions, and the arrangement of bore paths entangled into networks. The filter disks **2b** have a broad range of adaptable temperature, high-temperature resistance, and thermal shock resistance. Besides, the filter disks are anti-corrosive thereby being adapted to a plurality of corrosive acid or alkali media, and has a high strength and good toughness thereby being applicable to high pressure environment. Besides, the material has stable bore shapes, so that stable filter performance and good renewable performance are ensured. The filter performance can be recovered by 90% after being renewed. The upper surface of the filter disk **2b** is coated with a nanoscale surface agent (a thickness of a coating layer of between 10 and 1000 µm) to prevent the filter residue from being attached to the filter disk when using the filter to filter the materials.

The bottom part of the filter cylinder body **1** is in a conical structure. An outer wall of the filter cylinder body **1** is provided with an insulation jacket layer **1a**. A vapor inlet **6** is disposed at a middle-upper part of the filter cylinder body **1** for communicating with the insulation jacket layer **1a**. An insulation medium in the jacket can be a water vapor, a high pressure hot water, or a conduction oil. The filter adopts the design of the insulation jacket so that the liquid slurry having a large viscosity is filtered at a relatively high temperature and is not attached to the filter when being condensed, thereby ensuring smooth progress of the filter operation.

The bottom part of the filter cylinder body **1** adopts the conical structure. An aperture of the solid residue outlet **4** of the bottom of the filter cylinder body **1** is designed to be relatively large so that it is convenient to clean the filter residue in the bottom part of the filter. An outer wall of the filter cylinder body 1 is provided with an insulation jacket layer **1a**.

A height of the material inlet **3** is higher than a height of the filtrate outlet 5 by H1 = 200-700 mm. A distance between the filtrate outlet **5** and the bottom is H2 = 400-700 mm. The height of the material inlet **3** herein is designed to be higher than that of the material inlet of a common filter, so that a viscous liquid having a relatively high solid content can smoothly enter the body of the filter and is prevented from blockage in the bottom of the filter.

A straight cylinder body and an upper part head of the filter cylinder body **1** are connected by a flange **1b**.

The lower part of the filter cylinder body is provided with a remaining material outlet**10**. A height of the remaining material outlet **10** is higher than a height of the solid residue outlet **4** by H3 = 200-300 mm. When malfunction of the filter occurs or when the filtering process is accomplished, incompletely filtrated materials can be discharged from the remaining material outlet**10** so as to ensure production safety. A condensate outlet **8** is disposed between the filtrate outlet **5** and the solid residue outlet **4.**A ventilation opening **9** is disposed on an upper part of the filter cylinder body **1**.

The slurry cavity of the filter cylinder body has a temperature of between 200 and 400°C and a pressure of between 3.0 and 5.0 MPa (G).

A high-efficiency dynamic slurry-liquid-separating filtration method comprises: introducing an insulation medium (vapor, high temperature hot water, or conduction oil) into a filter cylinder body to preheat the filter, and maintaining introduction of the insulation medium until the filtering operation is finished.

The method further comprises the following steps:
1) starting filtering operation by a filter after preheating the filter, allowing materials to enter a slurry cavity of a filter body from a material inlet and to reach filter plates; controlling a rotational speed of the filter plates at a range of between 10 and 100 rpm; separating a solid filter residue from the materials on the filter plates, and allowing a filtrate to flow from the filter disks into a pipe of a filtrate outlet via a flow passage of the filter disk so as to discharge the filtrate out of the filter;
2) continuing the filtration for a period, accumulating a filter cake of filter residues on the filter disk to reach a certain thickness until an inside-outside pressure difference reaches 2.0 MPa; increasing the rotational speed of a motor driving rotation of the filter disk to between 100 and 300 rpm so as to remove the filter cake of the filter residues from the filter disk; when the removal of the filter cake of the filter residues from the filter disk is finished and the inside-outside pressure difference is controlled at 50 KPa below, controlling the rotational speed of the motor driving the rotation of the filter disk within a range of between 10 and 100 rpm again, maintaining normal filtering operation, and repeating the above process;
3) when the filtering operation is finished or the filter residues in the bottom part of the filter needs to be discharge, stopping filtering, removing the filter residues for preparation of a next filtration process; and
4) when the filter disk needs to be cleaned, starting a backblow system, stopping the materials from entering the slurry cavity of the filter body, enabling the filtrate outlet to serve as a backblow medium inlet; selecting the backblow medium from a filtrate supernatant or a diesel oil; carrying out backblow operation on the filtrate disk using the backblow medium; controlling the filtrate disk to operate at a rotational speed of between 10 and 100 rpm; and continuing the filtering operation after the backblow operation.

The backblow medium is the filtrate supernatant which will neither result in secondary pollution in the materials nor produce any waste water.

The processes are repeated as described in the above and the filtration will not be stopped until the filtration is accomplished or the filter residue in the bottom of the filter is required to be discharged. The filter residue is removed in timely for the preparation of the next filtration.

The variable-frequency motor is adopted herein by the invention so as to realize the direct and dynamic filtration. The principle of the direct dynamic filtration (also called thin layer of filter cake filtration or restricted filter cake filtration) is different the conventional filter cake filtration in that the dynamic filtration enables the materials to flow in parallel with a surface of the filtration medium (as shown in FIGS. 1, 3) so that the solid particles are not prone to accumulate on the surface of the filtration medium, thereby maintaining at a relative high filtration speed. The dynamic filtration is the filtration process alternating between filtration in the presence of the filtration cake and filtration in the absence of the filtration cake. The most fundamental purpose of the dynamic filtration is that the formation of the filtration cake is prevented or only a thin layer of filtration cake is formed during the filtration process so as to prevent the enlargement of a filtration resistance and the decrease of the filtration rate resulted from the thickening of the filtration cake. The direct dynamic filtration method makes the filter applicable for long period removal and purification of large quantities of particles.

The filter cylinder body 1 of the invention adopts a fully sealed structure. During the rotation of the filtration disk **2b** and the filter pipe **2a**, the pipe of the filtrate outlet 5 is fixed and immovable. The connecting part between the filter pipe and the pipe of the filtrate outlet adopts hard sealing and is sealed using a high pressure sealing ring (O-type ring), which therefore effectively solves the rotation sealing problem and achieves zero-leakage. The straight cylinder body and the upper part head of the filtrate cylinder body **1** are connected by the flange **1b** which is easy to be disassembled, so that it is convenient for repair and replacement of the filtration components.

The slurry cavity of the filter cylinder body has a temperature of between 200 and 400°C and a pressure of between 3.0 and 5.0 MPa (G).A filtration accuracy is controlled between 1 and 25 µm. The apparatus of the invention is adapted to intermittent filtration operation. The materials needing to be filtrated are filtrated by the specialized filter, the filter residues are accumulated at the outlet of the conical bottom part of the filter; when the filter residues reach a certain thickness, the filtration operation is stopped; a valve disposed at the outlet of the conical bottom part of the filter is then opened to discharge the filter residue (solid noble metal catalyst), thereby providing possibility for further recovering of the filter residue. The filtrate product after the filtration contains a part of solid impurities of small particles (possessing a grain size of 5 µm below), that is, the noble metal spent catalyst, which can be introduced into another filter apparatus having a higher filtration accuracy for carrying out a next step of refined filtration treatment if necessary.

## Claims

1. A high-efficiency dynamic slurry-liquid separator filter, comprising: a filter cylinder body (1), a filter pipe (2a) disposed in the filter cylinder body (1) and a filter core disposed on the filter pipe (2a), a material inlet (3) disposed on the filter cylinder body (1), a solid residue outlet (4) disposed at a bottom part of the filter cylinder body (1), and a filtrate outlet (5) disposed at a middle-lower part of the filter cylinder body (1); **characterized in that**
the filter core comprises a plurality of filter disks (2b) connected to the filter pipe (2a), and the filter disks (2b) are perpendicular to a longitudinal axis of the filter cylinder body (1);
an upper end of the filter pipe (2a) is connected to a rotational axis of a variable-frequency motor (7);a top part of the filter cylinder body (1) and a transmission shaft of the variable-frequency motor (7) are sealed through high pressure hard sealing; and
a lower part of the filter pipe (2a) is connected to a pipe of the filtrate outlet (5)via a connecting pipe joint (2c); the connecting pipe joint (2c) and the pipe of the filtrate outlet are perpendicularly fixed together; an upper opening of the connecting pipe joint (2c) and a rotational connection part of the lower part of the filter pipe (2a) are sealed through high-pressure hard sealing; and a lower part of the connecting pipe joint (2c) is sealed.

2. The separator filter of claim 1, **characterized In that**
each filter disk (2b) separately communicates with the filter pipe (2a); the filter disks (2b) and the filter pipe (2a) form groove connection;
the filter disk (2b) is fixed on a grooved plate (2g) for collecting a filtrate;
the filter disk (2b) and the grooved plate (2g) form a sealed cavity (2d), and a pipe opening (2e) at an inner side of the sealed cavity (2d) communicates with an inner cavity of the filter pipe (2a);
the grooved plate (2g) is connected to the filter pipe (2a) via a clamp (2f); and
the collected filtrate from each grooved plate (2g) is accumulated in the filter pipe (2a).

3. The separator filter claim 1 or 2, **characterized in that**
the filter disks (2b) are sintered porous metal materials having a pore size distribution of between 15 and 160 µm, a thickness of between 1 and 3 mm, and a working temperature range of between -200 and 800°C; and
an upper surface of each filter disk is coated with a nanoscale surface agent.

4. The separator filter claim 1 or 2, **characterized in that** the bottom part of the filter cylinder body (1) is in a conical structure; an outer wall of the filter cylinder body (1) is provided with an insulation jacket layer (1a); and a vapor inlet (6) is disposed at a middle-upper part of the filter cylinder body (1) for communicating with the insulation jacket layer (1a).

5. The separator filter claim 1 or 2, **characterized in that** a straight cylinder body and an upper part head of the filter cylinder body (1) are connected by a flange (1b).

6. The separator filter claim 1 or 2, **characterized in that** a height of the material inlet (3) is higher than a height of the filtrate outlet (5) by H1 of between 200 and 700 mm; and a distance between the filtrate outlet (5) and the bottom is H2 of between 400 and 700 mm.

7. The separator filter claim 1 or 2, **characterized in that**
the lower part of the filter cylinder body is provided with a remaining material outlet (10);
a height of the remaining material outlet (10) is higher than a height of the solid residue outlet (4) by H3 of between 200 and 300 mm;
a condensate outlet (8) is disposed between the filtrate outlet (5) and the solid residue outlet (4); and
a ventilation opening (9) is disposed on an upper part of the filter cylinder body (1).

8. The separator filter claim 3, **characterized in that** a straight cylinder body and an upper part head of the filter cylinder body (1) are connected by a flange (1b).

9. A method for dynamically separating a slurry-liquid mixture, the method comprising:
1) preheating a separator filter, adding materials to a slurry cavity of a filter body from a material inlet and to reach filter plates; controlling a rotational speed of the filter plates at a range of between 10 and 100 rpm; separating a solid filter residue from the materials on the filter plates, and allowing a filtrate to flow from the filter disks into a pipe of a filtrate outlet via a flow passage of the filter disk, and discharging the filtrate out of the separator filter;
2) continuing the filtration and allowing a filter cake of the filter residues to accumulate on the filter disk to reach a certain thickness until an inside-outside pressure difference of a filter pipe reaches 2.0 MPa; increasing the rotational speed of a motor driving the filter disk to between 100 and 300 rpm so as to remove the filter cake of the filter residues from the filter disk; when the filter cake of the filter residues is removed from the filter disk and the inside-outside pressure difference is less than 50 kPa, controlling the rotational speed of the motor driving the filter disk within a range of between 10 and 100 rpm, maintaining normal filtering operation;
3) when the filtering operation is finished or the filter residues in the bottom part of the filter needs to be discharged, stopping filtering, removing the filter residues for preparation of a next filtration process; and
4) when the filter disk needs to be cleaned, starting a backblow system, stopping the materials from entering the slurry cavity of the filter body, enabling the filtrate outlet to serve as a backblow medium inlet, the backblow medium being a filtrate supernatant or a diesel oil; carrying out backblow operation on the filtrate disk using the backblow medium; controlling the filtrate disk to operate at a rotational speed of between 10 and 100 rpm; and continuing the filtering operation after the backblow operation.

10. The method of claim 9, **characterized in that** the slurry cavity of the filter cylinder body has a working temperature of between 200 and 400 °C and a working pressure of between 3.0 and 5.0 MPa (G).
